# EUROPÄISCHE PATENTSCHRIFT

(11) **EP 3 221 195 B1**
(45) Veröffentlichungstag und Bekanntmachung des Hinweises auf die Patenterteilung: **05.09.2018**
(21) Anmeldenummer: 15794557.7
(22) Anmeldetag: 13.11.2015
(51) Int. Cl.: B60T 17/00, B01D 53/26, G01N 27/22

(54) **DRUCKLUFTSYSTEM MIT HYGROSKOPISCHEM SENSOR**
COMPRESSED AIR SYSTEM WITH HYGROSCOPIC SENSOR
SYSTÈME D'AIR COMPRIMÉ À CAPTEUR HYGROSCOPIQUE

(30) Priorität: 17.11.2014 DE 102014116801
(43) Veröffentlichungstag der Anmeldung: 27.09.2017
(73) Patentinhaber: KNORR-BREMSE Systeme für Nutzfahrzeuge GmbH, 80809 München (DE)
(72) Erfinder: KRABOT, Matyas, 2310 Szigetszentmiklós (HU); ZEMAN, Ferenc, 1114 Budapest (HU); JUHASZ, Anna, 2243 Koka (HU)
(86) Internationale Anmeldenummer: PCT/EP2015/076497
(87) Internationale Veröffentlichungsnummer: WO 2016/079011

(56) Entgegenhaltungen:
- WO-A1-93/05867
- DE-A1-102006 057 945
- DE-A1-102008 043 093
- DE-A1-102011 089 480
- DE-A1-102013 204 663
- FR-A1- 2 874 426

## Beschreibung

Die Erfindung betrifft ein Druckluftsystem zur Ansteuerung mindestens einer pneumatischen Komponente eines motorisierten Fahrzeuges, umfassend eine Sensoreinheit zur Detektion von Kondenswasser.

Das Einsatzgebiet der Erfindung erstreckt sich auf Fahrzeuge, die über Druckluftsysteme verfügen, mit denen beispielsweise Bremsen oder andere pneumatisch betätigbare Aktoren angesteuert werden können.

Dabei saugt ein Kompressor Umgebungsluft an, komprimiert diese und stellt die Druckluft den verschiedenen Verbrauchern zur Verfügung. Da in der Umgebungsluft Luftfeuchtigkeit enthalten sein kann, ist zur Entfernung der Feuchtigkeit aus der Druckluft ausgangseitig des Kompressors üblicherweise ein Trocknungsmittel vorgesehen, welches die Feuchtigkeit der durchströmenden Luft aufnimmt. In einer Regenerationsphase wird das gegebenenfalls gesättigte Trocknungsmittel in der Gegenrichtung von getrockneter Luft durchströmt um selbst getrocknet zu werden. Es kann allerdings vorkommen, dass aufgrund von Defekten die Lufttrocknung nicht fehlerfrei durchgeführt wird. Dann kann sich hinter dem Trocknungsmittel, also in einem Bereich, der frei von Luftfeuchtigkeit sein sollte, Feuchtigkeit anlagern, die wiederum zu weiteren Schäden führen kann.

Um solche Feuchtigkeit zu diagnostizieren, sind verschiedene Sensoren bekannt, die beispielsweise nach Detektion von Feuchtigkeit den Fahrer über eine Anzeige oder eine Kontrollleuchte darüber in Kenntnis setzen, beispielsweise damit dieser die Wartung und Reparatur des defekten Druckluftsystems veranlassen kann.

Aus der DE 10 2006 019 865 B3 geht eine Kartusche, eine Druckluftaufbearbeitungsanlage und ein Verfahren hervor, um über einen kapazitiven beziehungsweise einen resistiven Sensor und eine damit zusammenarbeitende elektrische Einrichtung Aussagen über den Feuchtigkeitsgehalt einer Lufttrocknungseinrichtung eines Fahrzeuges zu machen.

Aus der DE 199 11 741 A1 gehen eine Vorrichtung und ein Verfahren hervor, die in einem Druckluftsystem enthaltene Luftfeuchtigkeit über Messung der Drehzahl des Druckluft erzeugenden Kompressors zu bestimmen. Diese Methode verzichtet zwar im Gegensatz zu der vorhergenannten auf zusätzliche Sensorik, ist aber aufgrund ihrer indirekten Funktionsweise gleichzeitig im Allgemeinen weniger akkurat.

Die WO 93/05867 A1 offenbart ein Druckluftsystem, insbesondere für ein pneumatisches Bremssystem eines Nutzfahrzeuges, das im Wesentlichen aus einem Kolbenkompressor zur Erzeugung von Druckluft, einem nachgeschalteten Lufttrockner zum Entfernen von Feuchtigkeit aus der erzeugten Druckluft sowie einem Vorratsbehälter zur Speicherung der getrockneten Druckluft besteht. Im Bereich des Lufttrockners befindet sich eine Sensoreinheit zur Detektion von Kondenswasser. Wird ein Feuchtigkeitsschwellwert überschritten, so erfolgt eine optische Signalisierung des Fehlerfalls einer mangelhaften Trocknung der erzeugten Druckluft.

Es ist die Aufgabe der vorliegenden Erfindung, ein Druckluftsystem zu schaffen, das über eine simple Sensoreinheit verfügt, um Aussagen über den Feuchtigkeitsgehalt innerhalb eines Druckluftsystems zu machen.

Die Aufgabe ausgehend von einem Druckluftsystem gemäß dem Oberbegriff von Anspruch 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass die Sensoreinheit mindestens ein durch Aufnahme von Feuchtigkeit reversibel geometrisch expandierendes hygroskopisches Element umfasst, zur Zusammenarbeit mit einer elektrischen Expansionsdetektionsvorrichtung, um Kondenswasser oder Luftfeuchtigkeit innerhalb des Druckluftsystems zu detektieren und zu signalisieren.

Der Vorteil des Druckluftsystems besteht darin, dass ein mechanisch einfach aufgebauter Sensor, der gegebenenfalls günstig und einfach herzustellen und einzusetzen ist, durch Absorption von Feuchtigkeit und durch zu der Menge absorbierter Feuchtigkeit proportionale geometrische Expansion als Indikator für im Druckluftsystem auftretende Feuchtigkeit wirkt. Als hygroskopisches, also Wasser bindendes, Element kommen dabei verschiedene Materialen in Frage, wie sie beispielsweise in Sensoren in Bewässerungsanlagen eingesetzt werden. Bewährt haben sich zum Beispiel zusammengepresste Holzfasern.

Gemäß einer bevorzugten Ausführungsform der Erfindung ist das hygroskopische Element länglich ausgebildet, wobei an einem längenbezogenen ersten Ende ein Druckmittel zur Druckbeaufschlagung entgegen der feuchtigkeitsbedingten Expansionsrichtung des hygroskopischen Elements angeordnet ist. Dieses Druckmittel, beispielsweise eine Druckfeder, wirkt also der Expansion entgegen und gewährleistet, dass bei Trocknung des hygroskopischen Elementes dieses wieder reversibel auf dessen ursprüngliche Größe schrumpft.

Eine vorteilhafte Ausbildungsform der Erfindung sieht vor, dass die Expansionsdetektionsvorrichtung mindestens einen Reed-Schalter zur Betätigung durch einen am hygroskopischen Element befestigten Permanentmagneten umfasst. Dieser Schalter ist dann also durch die bei Reed-Schaltern übliche Glasummantelung von der umgebenden Feuchtigkeit geschützt, und kann ohne unmittelbaren mechanischen Kontakt betätigt werden, was eine weitgehende Verschleißarmut gewährleistet.

Eine weitere bevorzugte Ausführungsform der Erfindung sieht vor, dass die Expansionsdetektionsvorrichtung einen optischen Sensor umfasst. Dadurch kann beispielsweise durch eine Lichtschranke oder durch eine andere, gegebenenfalls räumlich kontinuierlich auflösende, Form der optischen Erfassung die Expansion des hygroskopischen Elementes optisch und somit nichtinvasiv, beziehungsweise ohne Krafteinwirkung, erfasst werden.

Eine andere bevorzugte Ausführungsform der Erfindung sieht vor, dass die Expansionsdetektionsvorrichtung mindestens einen elektromechanischen Schalter zur Betätigung durch das expandierende hygroskopische Element umfasst. Eine solche Ausführungsform ist besonders einfach herzustellen und basiert beispielsweise bei Einsatz eines Kippschalters auf direkten mechanischen Kontakt zwischen hygroskopischem Element und dem jeweiligen Schalter.

Eine weitere bevorzugte Ausführungsform sieht vor, dass die Expansionsdetektionsvorrichtung einen Hall-Sensor zur Messung des magnetischen Feldes eines mittelbar oder unmittelbar auf dem hygroskopischen Element befestigten Permanentmagneten umfasst. Ein solcher Sensor ist ebenfalls kostengünstig zu realisieren und kann nichtinvasiv und bei geeigneter Ummantelung unbeeinflusst von umgebender Feuchtigkeit beispielsweise nach einmaliger Kalibrierung den Expansionszustand des hygroskopischen Elements zuverlässig wiedergeben.

Gemäß einer Verbesserung der Erfindung ist die Sensoreinheit in eine Ablaufvorrichtung oder einen Ablaufstutzen integriert. In einer solchen Ablaufvorrichtung sammelt sich Kondenswasser typischerweise an und kann somit dort besonders früh detektiert werden. Anschließend kann durch die Sensoreinheit eine optische Signalisierung beispielsweise auf einer Armatur des Fahrzeugs ausgelöst werden. Es ist ebenfalls denkbar, dass der Sensor funktional in die Ablaufvorrichtung integriert ist, beispielsweise indem durch den Sensor mittelbar oder unmittelbar ein elektrischer Aktuator angesteuert wird, welcher die Ablaufvorrichtung öffnet, um das angesammelte Kondenswasser automatisiert zu entfernen.

Eine Verbesserung der Erfindung sieht vor, dass das mindestens eine hygroskopische Element auswechselbar in der Sensoreinheit angeordnet ist. Beispielsweise könnte das hygroskopische Element aus einer Reihe einzelner Scheiben bestehen, die in einem Gehäuse um eine Achse zentriert angeordnet sind, und die durch Öffnen des Gehäuses einfach entnehmbar sind. Der Vorteil dieser Ausbildungsform ist vor allem darin zu sehen, dass das hygroskopische Element, das neben Flüssigkeit beispielsweise auch Verschmutzungen aufnehmen kann, oder das auch aufgrund der Aufnahme von Flüssigkeit verschiedene Anzeichen von Verschleiß aufweisen kann, die sehr viel früher eintreten können als Verschleiß von feuchtigkeitsbeständigen Komponenten, als Wartungsmaßnahme leicht ausgewechselt werden kann.

Eine besonders bevorzugte Ausführungsform der Erfindung sieht vor, dass die Expansionsdetektionsvorrichtung zur Unterscheidung von mehr als zwei Expansionszuständen geeignet ausgebildet ist. Dies schließt ein, dass die Expansionsdetektionsvorrichtung ein kontinuierliches Signal ausgibt, welches beispielsweise proportional zur Expansion des hygroskopischen Elementes ist, wie beispielsweise bei Verwendung eines Hall-Sensors oder bei Verwendung eines geeigneten optischen Sensors, sowie Expansionsdetektionsvorrichtungen, bei denen mehrere, jeweils binär arbeitende Schalter, wie beispielsweise Reed-Schalter oder einfache mechanische Kippschalter, hintereinander angeordnet sind. Der Vorteil dieser Ausbildungsform ist darin zu sehen, dass beispielsweise auf einen geringen Feuchtigkeitsgehalt anders reagiert werden kann als auf einen vergleichsweise hohen Feuchtigkeitsgehalt.

Weitere die Erfindung verbessernde Maßnahmen werden nachstehend gemeinsam mit der Beschreibung eines bevorzugten Ausführungsbeispiels der Erfindung anhand von zwei Figuren näher dargestellt. Es zeigen:
- Figur 1: das Schema eines erfindungsgemäßen Druckluftsystems, und
- Figur 2: die Sensoreinheit eines erfindungsgemäßen Druckluftsystems.

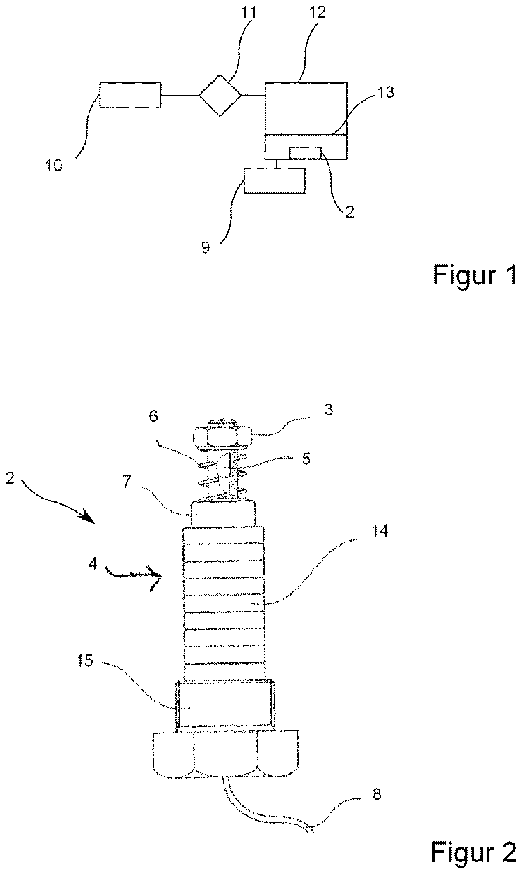

Gemäß Figur 1 umfasst das Druckluftsystem 1 eines hier nicht weiter dargestellten Fahrzeuges einen Kompressor 10, welcher durch einen Luftentfeuchter 11 Druckluft zu einem Druckluftreservoir 12 pumpt. In einem Becken 13 in einem unteren Teil des Druckluftreservoirs 12 sammelt sich beispielsweise bei Sättigung oder Fehlfunktion des Luftentfeuchters 11 durch Kondensation an den Innenwänden des Druckluftreservoirs 12 an dessen Unterseite flüssiges Kondenswasser. An der Unterseite des Beckens 13 ist eine Sensoreinheit 2 angeordnet, die wiederum bei Detektion von ausreichender Feuchtigkeit ein Signal nach abgibt, um die Betätigung der Ablaufvorrichtung 9 zu veranlassen, um die Kondensflüssigkeit aus dem Becken über die Ablaufvorrichtung an die hier nicht dargestellte Umwelt abzulassen. Diese Betätigung kann manuell oder automatisiert geschehen.

Gemäß Figur 2 verfügt die Sensoreinheit 2 über ein hygroskopisches Element 4, welches aus einer Vielzahl von hygroskopischen Scheiben 14 aufgebaut ist. Das hygroskopische Element 4 ist dabei länglich ausgebildet und zwischen einem unteren Teil des Gehäuses 15 und einem Permanentmagneten 7 eingespannt, welcher durch ein Druckmittel 6 entgegen der feuchtigkeitsbedingten Expansionsrichtung des hygroskopischen Elementes 4 mit Kraft beaufschlagt ist. Im Bereich des Druckmittels 6 ist eine Expansionsdetektionsvorrichtung 5 in Form zweier in Expansionsrichtung hintereinander angeordneter, hier nicht im Detail dargestellter Reed-Schalter angeordnet. Die Druckfeder ist dabei zwischen dem Permanentmagneten 7 und einer an dem Gehäuse befestigten Schraubenmutter 3 eingespannt.

Eine mit der Expansionsdetektionsvorrichtung zusammenarbeitende elektrische Leitung 8 führt dabei zu einer hier nicht dargestellten Steuereinheit, die in Abhängigkeit der Anzahl der aktivierten Reed-Schalter eine optische Signalisierung auf einer Armatur des Fahrzeuges auslöst und eine hier nicht dargestellte Ablaufvorrichtung 9 aktiviert.

Die Funktionsweise dieser Sensoreinheit sieht vor, dass das hygroskopische Element 4 sich durch Absorption von Flüssigkeit ausdehnt, wodurch der Permanentmagnet 7 in Richtung der Expansionsdetektionsvorrichtung bewegt wird, wodurch der darin enthaltene erste und gegebenenfalls zweite Reed-Schalter betätigt wird. Wenn danach das hygroskopische Element wieder trocknet, wird es durch die mit der Trocknung einhergehenden Schrumpfung und durch die Druckbeaufschlagung durch das Druckmittel 16 wieder zurückbewegt, wodurch auch der Permanentmagnet 7 sich wieder von der Expansionsdetektionsvorrichtung 5 entfernt und insbesondere die darin enthaltenen Reed-Schalter nacheinander wieder deaktiviert werden.

Die Erfindung ist nicht beschränkt auf das vorstehend beschriebene bevorzugte Ausführungsbeispiel. Es sind vielmehr auch Abwandlungen hiervon denkbar, welche vom Schutzbereich der nachfolgenden Ansprüche mit umfasst sind. So ist es beispielsweise auch möglich, dass als Expansionsdetektionsvorrichtung ein PiezoElement eingesetzt wird.

### Bezugszeichenliste

- 1: Druckluftsystem
- 2: Sensoreinheit
- 3: Schraubenmutter
- 4: hygroskopisches Element
- 5: Expansionsdetektionsvorrichtung
- 6: Druckmittel
- 7: Permanentmagnet
- 8: elektrische Leitung
- 9: Ablaufvorrichtung
- 10: Kompressor
- 11: Luftentfeuchter
- 12: Druckluftreservoir
- 13: Becken
- 14: hygroskopische Scheibe
- 15: Gehäuse
- 16: Druckmittel
- 17: Schraubenmutter

## Patentansprüche

1. Druckluftsystem (1) zur Ansteuerung mindestens einer pneumatischen Komponente eines motorisierten Fahrzeuges, umfassend eine Sensoreinheit (2) zur Detektion von Kondenswasser,
**dadurch gekennzeichnet, dass** die Sensoreinheit (2) mindestens ein durch Aufnahme von Feuchtigkeit reversibel geometrisch expandierendes hygroskopisches Element (4) umfasst, zur Zusammenarbeit mit einer elektrischen Expansionsdetektionsvorrichtung (5), um Kondenswasser oder Luftfeuchtigkeit innerhalb des Druckluftsystems (1) zu detektieren und zu signalisieren.

2. Druckluftsystem (1) nach Anspruch 1,
**dadurch gekennzeichnet, dass** das hygroskopische Element (4) länglich ausgebildet ist, wobei an einem längenbezogenen ersten Ende ein Druckmittel (6) zur Druckbeaufschlagung entgegen der Expansionsrichtung des hygroskopischen Elements (4) bei Aufnahme von Feuchtigkeit angeordnet ist.

3. Druckluftsystem (1) nach einem der vorherigen Ansprüche,
**dadurch gekennzeichnet, dass** die Expansionsdetektionsvorrichtung (5) mindestens einen Reed-Schalter zur Betätigung durch einen am hygroskopischen Element (4) befestigten Permanentmagneten (7) umfasst.

4. Druckluftsystem (1) nach Anspruch 1 oder 2,
**dadurch gekennzeichnet, dass** die Expansionsdetektionsvorrichtung (5) einen optischen Sensor umfasst.

5. Druckluftsystem (1) nach Anspruch 1 oder 2,
**dadurch gekennzeichnet, dass** die Expansionsdetektionsvorrichtung (5) mindestens einen elektromechanischen Schalter zur Betätigung durch das expandierende hygroskopische Element (4) umfasst.

6. Druckluftsystem (1) nach Anspruch 1 oder 2,
**dadurch gekennzeichnet, dass** die Expansionsdetektionsvorrichtung (5) einen Hall-Sensor zur Messung des magnetischen Feldes eines an dem hygroskopischen Element (4) befestigen Permanentmagneten (7) umfasst.

7. Druckluftsystem (1) nach einem der vorherigen Ansprüche,
**dadurch gekennzeichnet, dass** die Sensoreinheit (2) in eine Ablaufvorrichtung (9) integriert ist.

8. Druckluftsystem (1) nach einem der vorherigen Ansprüche,
**dadurch gekennzeichnet, dass** das hygroskopische Element (4) auswechselbar in der Sensoreinheit (2) angeordnet ist, um Wartungsarbeiten zu vereinfachen.

9. Druckluftsystem (1) nach einem der vorherigen Ansprüche,
**dadurch gekennzeichnet, dass** die Expansionsdetektionsvorrichtung (5) zur Unterscheidung von mehr als zwei Expansionszuständen geeignet ausgebildet ist.

10. Druckluftsystem (1) nach Anspruch 9,
**dadurch gekennzeichnet, dass** die Expansionsdetektionsvorrichtung (5) mindestens zwei binär betätigbare Schalter umfasst.

## Claims

1. Compressed air system (1) for controlling at least one pneumatic component of a motorised vehicle, comprising a sensor unit (2) for detecting condensation, **characterised in that** the sensor unit (2) comprises at least one hygroscopic element (4), which reversibly expands geometrically as a result of absorbing moisture, for cooperation with an electric expansion detection device (5), in order to detect and to signal condensation or atmospheric humidity within the compressed air system (1).

2. Compressed air system (1) according to claim 1,
**characterised in that** the hygroscopic element (4) is of elongated form, wherein a pressure means (6) for the application of pressure counter to the moisture-induced direction of expansion of the hygroscopic element (4) is arranged at a first end, as based on the length.

3. Compressed air system (1) according to any of the preceding claims, **characterised in that** the expansion detection device (5) comprises at least one reed switch for actuation by a permanent magnet (7) fixed to the hygroscopic element (4).

4. Compressed air system (1) according to claim 1 or 2,
**characterised in that** the expansion detection device (5) comprises an optical sensor.

5. Compressed air system (1) according to claim 1 or 2,
**characterised in that** the expansion detection device (5) comprises at least one electromechanical switch for actuation by the expanding hygroscopic element (4).

6. Compressed air system (1) according to claim 1 or 2,
**characterised in that** the expansion detection device (5) comprises a Hall sensor for measuring the magnetic field of a permanent magnet (7) fixed to the hygroscopic element (4).

7. Compressed air system (1) according to any of the preceding claims,
**characterised in that** the sensor unit (2) is integrated in a drain device (9).

8. Compressed air system (1) according to any of the preceding claims,
**characterised in that** the hygroscopic element (4) is arranged interchangeably in the sensor unit (2), in order to simplify maintenance work.

9. Compressed air system (1) according to any of the preceding claims,
**characterised in that** the expansion detection device (5) is designed suitably to distinguish between more than two expansion states.

10. Compressed air system (1) according to claim 9,
**characterised in that** the expansion detection device (5) comprises at least two binary-actuation switches.

## Revendications

1. Système (1) à air comprimé pour commander au moins un composant pneumatique d'un véhicule motorisé, comprenant une unité (2) de capteur pour détecter de l'eau de condensation, **caractérisé en ce que** l'unité (2) de capteur comprend au moins un élément (4) hygroscopique s'agrandissant géométriquement de manière réversible par absorption d'humidité, pour la coopération avec un système (5) électrique de détection d'agrandissement, afin de détecter et de signaler de l'eau de condensation ou de l'humidité de l'air dans le système (1) à air comprimé.

2. Système (1) à air comprimé suivant la revendication 1, **caractérisé en ce que** l'élément (4) hygroscopique est oblong, dans lequel, à une première extrémité, rapportée en longueur, est disposé un moyen (6) de pression pour l'application d'une pression dans le sens contraire au sens d'agrandissement de l'élément (4) hygroscopique lorsque de l'humidité est absorbée.

3. Système (1) à air comprimé suivant l'une des revendications précédentes,
**caractérisé en ce que** le système (5) de détection d'agrandissement comprend au moins un interrupteur Reed pour l'actionnement par un aimant (7) permanent fixé à l'élément (4) hygroscopique.

4. Système (1) à air comprimé suivant la revendication 1 ou 2, **caractérisé en ce que** le système (5) de détection d'agrandissement comprend un capteur optique.

5. Système (1) à air comprimé suivant la revendication 1 ou 2, **caractérisé en ce que** le système (5) de détection d'agrandissement comprend au moins un interrupteur électromécanique pour l'actionnement par l'élément (4) hygroscopique agrandi.

6. Système (1) à air comprimé suivant la revendication 1 ou 2, **caractérisé en ce que** le système (5) de détection d'agrandissement comprend un capteur de Hall pour la mesure du champ magnétique d'un aimant (7) permanent fixé à l'élément (4) hygroscopique.

7. Système (1) à air comprimé suivant l'une des revendications précédentes,
**caractérisé en ce que** l'unité (2) de capteur est intégrée dans un dispositif (9) d'écoulement.

8. Système (1) à air comprimé suivant l'une des revendications précédentes,
**caractérisé en ce que** l'élément (4) hygroscopique est monté avec possibilité de remplacement dans l'unité (2) de capteur, pour simplifier des travaux d'entretien.

9. Système (1) à air comprimé suivant l'une des revendications précédentes,
**caractérisé en ce que** le système (5) de détection d'agrandissement est constitué de manière propre à distinguer plus de deux états d'agrandissement.

10. Système (1) à air comprimé suivant la revendication 9, **caractérisé en ce que** le système (5) de détection d'agrandissement comprend au moins deux interrupteurs pouvant fonctionner de manière binaire.
